# EUROPÄISCHE PATENTSCHRIFT

(11) **EP 3 456 591 B1**
(45) Veröffentlichungstag und Bekanntmachung des Hinweises auf die Patenterteilung: **10.06.2020**
(21) Anmeldenummer: 18191722.0
(22) Anmeldetag: 30.08.2018
(51) Int. Cl.: B60R 13/02

(54) **BAUTEILSYSTEM ZUR FIXIERUNG EINES VERKLEIDUNGSTEILS UND KRAFTFAHRZEUG**
COMPONENT SYSTEM FOR FIXING A TRIM PART AND MOTOR VEHICLE
SYSTÈME DE COMPOSANTS PERMETTANT DE FIXER UNE PIÈCE D'HABILLAGE ET VÉHICULE AUTOMOBILE

(30) Priorität: 15.09.2017 DE 102017216430
(43) Veröffentlichungstag der Anmeldung: 20.03.2019
(73) Patentinhaber: VOLKSWAGEN AKTIENGESELLSCHAFT, 38440 Wolfsburg (DE)
(72) Erfinder: Marschall, Uwe, 38442 Wolfsburg (DE); Grobe, Michaela, 38557 Osloß (DE)

(56) Entgegenhaltungen:
- DE-A1-102008 047 461
- DE-A1-102009 011 017
- DE-A1-102014 204 236
- DE-A1-102015 203 035
- DE-A1-102015 216 526
- DE-T2-602004 000 953

## Beschreibung

Die Erfindung betrifft ein Bauteilsystem zur Fixierung eines Verkleidungsteils in einer definierten Position sowie ein Kraftfahrzeug, insbesondere einen Personenkraftwagen.

Ein sauberes und gleichmäßiges Fugenbild ist ein Qualitätsmerkmal der Innenverkleidung von Kraftfahrzeugen. Insbesondere sind sichtbare Spalte zu minimieren und derart auszugestalten, dass ihr Erscheinungsbild exakt, gleichbleibend und unabhängig von äußeren Einflüssen wie Temperatur oder Luftfeuchtigkeit ist. Dies ist beispielsweise bei den Übergängen zwischen Säulenverkleidungen und der Dachverkleidung, auch als Formhimmel bezeichnet, von Bedeutung. Die betreffenden Verkleidungsteile sind typischerweise aus flexiblen Materialien hergestellt und demnach unter Wirkung äußerer Kräfte in Bezug zur Fahrzeugkarosserie in gewissen Grenzen beweglich.

Eine Möglichkeit zur Realisierung eines gleichmäßigen Fugenbildes bzw. zur Minimierung der Spalte zwischen den betreffenden Teilen ist die Nutzung von Distanzstücken, die beispielsweise aus Schaumstoff sein können. Diese werden beispielsweise zwischen Karosseriebauteilen und Verkleidungsteilen angeordnet und dienen als Anschlagelement, um ein Verschieben des Verkleidungsteils zu verhindern. Nachteilig ist dabei die Notwendigkeit zusätzlicher Bauteile, die zu einem Mehraufwand in Konstruktion und Herstellung einerseits und in der Montage andererseits führen. Weiterhin ist diese Lösung nicht immer geeignet, das Spaltmaß wie erforderlich zu minimieren, etwa wenn konstruktionsbedingt größeren Abständen zwischen den Distanzstücken und dem sichtbaren Spalt notwendig sind, sodass es zur Verformung der flexiblen Verkleidungsteile kommt, oder wenn das flexible Material der Distanzstücke selbst zu große Verformungen zulässt.

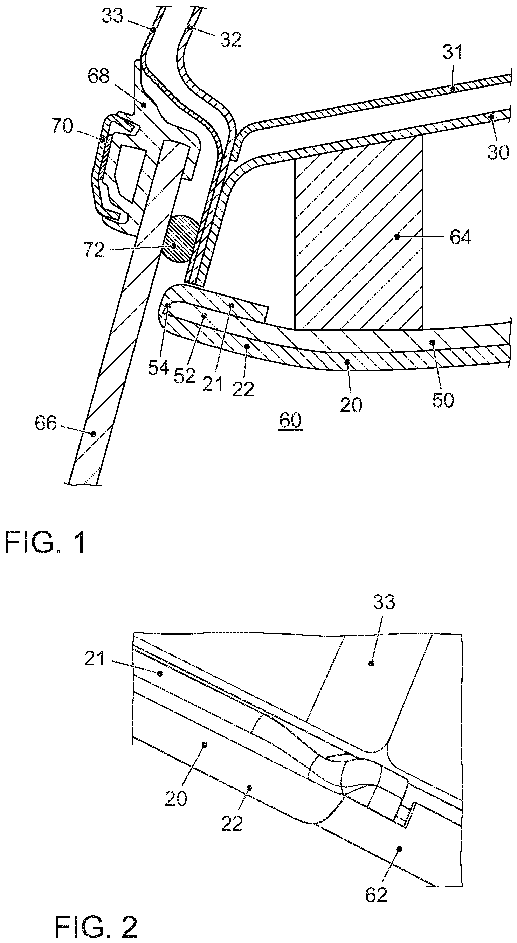

Einzelne Aspekte dieser aus dem Stand der Technik bekannten Lösung sind in den Figuren 1 und 2 dargestellt. Figur 1 zeigt einen Schnitt durch den seitlichen Anbindungsbereich eines Verkleidungsteils 20, nämlich eines Formhimmels, an Kraftfahrzeug-Karosseriebauteile 30, 31, 32, 33. Der Schnitt verläuft senkrecht zur Längserstreckungsrichtung der C-Säule mit Blickrichtung entgegen der Fahrtrichtung des Kraftfahrzeugs und zeigt die rechte Seite bzw. Beifahrerseite des Kraftfahrzeugs.

Der Kraftfahrzeug-Rohbau umfasst an der gezeigten Position ein Seitenteil innen 30, ein Seitenteil innen hinten 31, ein Verbindungsteil hinten 32 sowie ein Seitenteil außen 33. Diese bilden gemeinsam einen Teil der Dachkonstruktion aus. Im äußeren, links dargestellten Bereich schließt an das Seitenteil außen 33 ein partiell mittels einer Außenblende 70 verblendetes Dichtungsprofil 68 an. Dieses hält die Seitenscheibe 66, welche mittels einer Kleberaupe 72 am Seitenteil außen 33 befestigt ist.

Das Seitenteil außen 33, das Verbindungsteil hinten 32 sowie das Seitenteil innen 30 verlaufen in ihren unteren Bereichen parallel zueinander und enden in einer gemeinsamen Stirnseite, unterhalb welcher sich ein Spalt mit einer Dicke von ca. 0,5 mm befindet.

Das Verkleidungsteil 20, nämlich der Formhimmel des Kraftfahrzeugs, wird von einem Verkleidungsträger 50 gehalten. Der Formhimmel ist die innen liegende Dachverkleidung des Kraftfahrzeugs, die den Kraftfahrzeug-Innenraum 60 nach oben hin begrenzt. Am nach außen in Richtung auf die Seitenscheibe 66 weisenden Ende ist das Verkleidungsteil 20 derart um die Begrenzung 54 des Verkleidungsträgers 54 umgebogen, dass ein erster Bereich 21 des Verkleidungsteils 20 oberhalb des entsprechenden Abschnitts 52 des Verkleidungsträgers 50 liegt und ein zweiter Bereich 22 des Verkleidungsteils 20 unterhalb des Abschnitts 52 liegt. Der erste Bereich 21 des Verkleidungsteils 20 bildet dabei die untere Begrenzung des von den Karosserie-Bauteilen 30, 32 und 33 nach oben hin begrenzten Spaltes.

Zur Fixierung des Verkleidungsträgers 50 und damit des Verkleidungsteils 20 in einer definierten Position bezüglich des Seitenteils innen 30 ist zwischen besagtem Seitenteil innen 30 und dem Verkleidungsträger 50 ein aus einem Schaumstoff hergestelltes Distanzstück 64 angeordnet. Dieses hat eine Höhe von 32-36 mm, eine Breite von 25 mm und eine Tiefe von 35 mm. Es ist ersichtlich, dass zumindest ein Distanzstück auf jeder Seite des Fahrzeugs eingesetzt werden muss, um die definierte Position des Verkleidungsteils 20 beidseitig zu fixieren.

In Fig. 2 ist das aus der beschriebenen Konstruktion resultierende Bild am Übergang des Verkleidungsteils 20 zur Säulenverkleidung 62, hier der Verkleidung der C-Säule, gezeigt. Mit Blickrichtung von außen auf die rechte Seite bzw. Fahrerseite eines die oben beschriebene Konstruktion aufweisenden Kraftfahrzeugs durch die nicht dargestellte Seitenscheibe zeigt sich der umgebogene Bereich des Verkleidungsteils 20 von außen. Oben befindet sich der erste Bereich 21 des Verkleidungsteils 20 und darunter befindet sich dessen zweiter Bereich 22. Zwischen dem oben liegenden ersten Bereich 21 und dem Kraftfahrzeug-Rohbau, nämlich dem Seitenteil außen 33, ist der beschriebene Spalt zu erkennen.

Auf der rechten Seite ist ersichtlich, dass das um den (nicht gezeigten) Verkleidungsträger umgebogene Verkleidungsteil 20 in die Säulenverkleidung 62 eingesteckt ist bzw. von dieser gehalten wird. Zwischen Säulenverkleidung 62 und Verkleidungsteil 20 ist eine Lücke sichtbar, die aus einer nicht bestimmungsgemäß eingehakten Rastnase resultiert. Dies ist der Fall, da das Verkleidungsteil 20, der Formhimmel, durch das flexible Distanzstück (vergl. Fig. 1) nicht fest genug in der gewünschten Position gehalten bzw. nicht ausreichend gegen ein Herauffedern gesichert wird, und demnach an einer zu hohen Position angeordnet ist. Auf diese Weise entsteht zwischen Verkleidungsteil 20 und Säulenverkleidung 62 die gezeigte Lücke und die Rastverbindung kann nicht hergestellt werden.

Eine weitere Möglichkeit zur Realisierung eines gleichmäßigen Fugenbildes ist die Verstärkung betreffender Verkleidungsteile, wobei durch die damit einhergehende Versteifung die Beweglichkeit des Verkleidungsteils verringert wird. Dies ist hinsichtlich des Platzbedarfs sowie des Gewichts der jeweiligen Teile nachteilig.

Auch die Nutzung von Dichtschäumen zwischen den betreffenden Teilen oder Kederprofilen zur Verbindung der Teile ist möglich. Dies bringt jedoch einen deutlichen Mehraufwand in der Fertigung sowie hohe zusätzliche Kosten mit sich.

Die DE 10 2006 053 990 A1 beschreibt eine Konstruktion zur Befestigung einer Innenabdeckung an einer Fahrzeug-A-Säule. Es erstreckt sich ein Raum von der Innenseite einer A-Säulen-Abdeckung zur Innenseite einer Dachverkleidung, wobei in dem Raum ein Airbag angeordnet ist. In der Konstruktion ist eine Einrastnase angeordnet, die in fast dieselbe Richtung weist wie die Entfaltungsrichtung des Airbags. Diese ist an einem Teil angebracht, welches sich neben einem Verbindungsteil der A-Säulen-Abdeckung und der Dachverkleidung befindet und sich entlang der Türöffnung eines Karosserieblechs auf der Innenseite der A-Säulen-Abdeckung erstreckt. Die Einrastnase ist in einem Bereich von einem Randteil einer Türöffnung bis zur Innenseite des Fahrzeugraumes angebracht. Ein korrespondierendes, entgegengesetzt ausgerichtetes Einrastteil befindet sich auf der Rückseite eines Endkantenteils auf der Türöffnungsseite der A-Säulen-Abdeckung. Eine Abdeckungshalterung verhindert das Entstehen eines Spalts zwischen der A-Säulenabdeckung und der Dachverkleidung.

Die DE 11 2011 100 680 B4 offenbart eine Kopfairbagvorrichtung für ein Fahrzeug, welche einen entlang einer Längsrichtung der Fahrzeugkarosserie ausgerichteten Kopfairbag-Hauptkörper umfasst, der mit einer Säulenverkleidung und einer Dachverkleidung abgedeckt ist. Der Kopfairbag-Hauptkörper ist weiterhin in einem vorderen oder hinteren Säulenteil und einem Dachseitenholmteil der Karosserie gefaltet, um sich im Fahrgastraum nach unten entfalten zu können. Weiterhin umfasst die Kopfairbagvorrichtung ein Befestigungselement, welches die Säulenverkleidung an dem Säulenteil befestigt.

Die DE 60 2004 000 953 T2 offenbart eine Kopfairbagvorrichtung für eine Fahrzeug.

Es ist die Aufgabe der Erfindung, ein Bauteilsystem sowie ein Kraftfahrzeug mit einem Bauteilsystem zur Verfügung zu stellen, mit welchem die Fixierung eines Verkleidungsteils an einer definierten Position auf einfache, dauerhafte und kostengünstige Weise realisierbar ist.

Die Aufgabe wird gelöst durch das Bauteilsystem zur Fixierung eines Verkleidungsteils gemäß Anspruch 1 sowie durch das Kraftfahrzeug gemäß Anspruch 8. Ausgestaltungen des Bauteilsystems sind in den Unteransprüchen 2-7 angegeben, eine Ausgestaltung des Kraftfahrzeugs ist in Unteranspruch 9 angegeben.

Ein erster Aspekt der Erfindung ist ein Bauteilsystem zur Fixierung eines Verkleidungsteils in einer definierten Position. Dieses umfasst ein in Bezug zu einem Kraftfahrzeug-Karosseriebauteil zu fixierendes Verkleidungsteil, insbesondere einen Formhimmel, einen Verkleidungsträger zum Tragen des Verkleidungsteils sowie eine Gegendruckeinrichtung zur Ausübung einer ersten Kraft auf einen ersten Bereich des Verkleidungsteils. Zumindest ein Abschnitt des Verkleidungsträgers ist zwecks Ausübung einer der ersten Kraft entgegengerichteten zweiten Kraft auf den ersten Bereich des Verkleidungsteils an der der Gegendruckeinrichtung gegenüberliegenden Seite des ersten Bereichs des Verkleidungsteils angeordnet. Ein zweiter Bereich des Verkleidungsteils ist an der dem ersten Bereich des Verkleidungsteils gegenüberliegenden Seite des Verkleidungsträgers angeordnet und bildet damit eine sichtbare Seite des Verkleidungsteils aus.

Insbesondere ist das Verkleidungsteil eine innere Dachverkleidung eines Kraftfahrzeugs, welche auch als Formhimmel bezeichnet wird. Es ist typischerweise aus einem flexiblen Material, wie etwa einem Schaumstoff, hergestellt. Der zweite Bereich ist dabei insbesondere aus einem Fahrzeuginnenraum eines das Bauteilsystem aufweisenden Kraftfahrzeugs aus sichtbar. Der Verkleidungsträger ist ein beliebig geformtes Bauteil zum Tragen zumindest eines Bereichs des Verkleidungsteils. Insbesondere ist er einerseits mit dem Verkleidungsteil und andererseits direkt oder indirekt mit der Fahrzeugkarosserie verbunden. Er kann beispielsweise von einer Säulenverkleidung gehalten sein. Der Verkleidungsträger kann aus einem Kunststoff wie beispielsweise Polyurethan bestehen.

Insbesondere sind die Gegendruckeinrichtung, das Verkleidungsteil und/oder der Verkleidungsträger zur Realisierung einer kraft- und/oder formschlüssigen Verbindung zwischen der Gegendruckeinrichtung und dem Verkleidungsteil entlang zumindest einer Raumrichtung angeordnet. Es wird wenigstens ein Bereich eines Verkleidungsteils derart fixiert, dass diese gegen ein Verschieben entgegen der Wirkrichtung der ersten Kraft gesichert ist. Fixieren im Sinne der Erfindung meint insbesondere die Einschränkung wenigstens eines Freiheitsgrades.

Das Kraftfahrzeug-Karosseriebauteil, auch als Rohbauteil bezeichnet, kann beispielsweise ein Blechteil sein, welches ein Teil der Dachkonstruktion bzw. eines Seitenholms des Kraftfahrzeugs ist.

Insbesondere ist die erste und/oder die zweite Kraft eine dauerhaft wirkende Druckkraft. Die erste Kraft dient der Fixierung des Verkleidungsteils in der bezüglich des Kraftfahrzeug-Karosseriebauteils definierten Position.

Mit anderen Worten ist zumindest ein Abschnitt des Verkleidungsträgers zwischen einem ersten und einem zweiten Bereich des Verkleidungsteils angeordnet. An der dem Abschnitt des Verkleidungsträgers abgewandten Seite des ersten Bereichs befindet sich die Gegendruckeinrichtung. Der Abschnitt des Verkleidungsträgers ist zur Ausübung der der ersten Kraft entgegengerichteten zweiten Kraft auf den ersten Bereich des Verkleidungsteils eingerichtet. In einer Ausgestaltung wird der erste Bereich des Verkleidungsteils zwischen dem Abschnitt des Verkleidungsträgers und der Gegendruckeinrichtung eingeklemmt. Der Abschnitt des Verkleidungsträgers kann ein Ende des Verkleidungsträgers sein. Beispielsweise kann das Verkleidungsteil um dieses Ende herumgeführt sein.

Insbesondere werden der Verkleidungsträger und das daran angeordnete Verkleidungsteil durch eine externe Einrichtung wie etwa eine Säulenabdeckung in ihrer Position in Bezug zur Gegendruckeinrichtung fixiert, so dass die Gegendruckeinrichtung die erste Kraft auf das Verkleidungsteil ausübt bzw. ausüben kann. Die externe Einrichtung kann dabei eine dritte Kraft ausüben, in deren Folge die dieser entgegengesetzt wirkende erste Kraft realisiert wird. Demnach fungiert die Gegendruckeinrichtung als Widerlager zur zumindest teilweisen Aufnahme der auf das Verkleidungsteil bzw. auf den Verkleidungsträger ausgeübten dritten Kraft. Die mittels der Gegendruckeinrichtung auf das Verkleidungsteil wirkende erste Kraft ergibt sich als Reaktion auf die dritte Kraft.

Das Bauteilsystem umfasst erfindungsgemäß das Kraftfahrzeug-Karosseriebauteil, wobei wenigstens ein Abschnitt des Kraftfahrzeug-Karosseriebauteils die Gegendruckeinrichtung ausbildet. Die Gegendruckeinrichtung kann als starres Bauteil ausgeführt sein. Die erste Kraft kann eine infolge der durch den Verkleidungsträger ausgeübten zweiten Kraft realisierte Gegenkraft sein, die dieselbe Größe hat wie die zweite Kraft und entgegengesetzt zu dieser ausgerichtet ist.

Die beschriebene Lösung ermöglicht auf einfache, dauerhafte und kostengünstige Weise die Fixierung des Verkleidungsteils in einer definierten Position. Durch die Gegendruckeinrichtung ist ein Verschieben des Verkleidungsteils nicht möglich, wodurch die Bildung eines Spalts effektiv unterbunden wird. Darüber hinaus bietet die erfindungsgemäße Lösung den Vorteil der einfachen und kostengünstigen Befestigung des Verkleidungsteils am Verkleidungsträger durch die beidseitig wirkenden ersten und zweiten Kräfte. Zusätzliche Bauteile wie etwa Distanzstücke sind nicht notwendig.

In einer Ausgestaltung des Bauteilsystems ist das Verkleidungsteil U-förmig um eine Begrenzung des Verkleidungsträgers angeordnet.

Insbesondere ist das Verkleidungsteil um die Begrenzung des Verkleidungsträgers herumgeführt bzw. umgebogen. Dabei können die beiden auf unterschiedlichen Seiten des Verkleidungsträgers befindlichen ersten und zweiten Bereiche des Verkleidungsteils im Wesentlichen parallel zueinander verlaufend angeordnet sein.

Die Begrenzung des Verkleidungsträgers begrenzt diesen entlang zumindest einer Raumrichtung. Typischerweise meint Begrenzung ein Ende des Verkleidungsträgers, die Begrenzung kann aber auch als Öffnung im Verkleidungsträger realisiert sein.

Diese Ausgestaltung bringt den Vorteil einer besonders einfachen Montage mit sich, da das Verteilungsteil, beispielsweise eine Schaumabdeckung, auf einfache Weise um die Begrenzung des Verkleidungsträgers herum umgebogen und auf diese Weise fixiert werden kann.

In einer weiteren Ausgestaltung des Bauteilsystems umfasst das Bauteilsystem das Kraftfahrzeug-Karosseriebauteil, bezüglich dessen das Verkleidungsteil in einer definierten Position zu fixieren ist. Wenigstens ein Abschnitt des Kraftfahrzeug-Karosseriebauteils bildet die Gegendruckeinrichtung aus.

Mit anderen Worten wird ein Kraftfahrzeug-Karosseriebauteil, in Bezug zu welchem ein Spalt zu minimieren ist, selbst als Gegendruckeinrichtung genutzt. In dieser Ausgestaltung wird zumindest eines der sowieso vorhandenen Rohbauteile, auch als Flansch bezeichnet, im Vergleich zu bisher bekannten Lösungen zwecks Kontaktierung des Verteilungsteils unter Ausübung der ersten Kraft verlängert. Dabei weist der das Verkleidungsteil kontaktierende Bereich bzw. der verlängerte Bereich des Kraftfahrzeug-Karosseriebauteils in Richtung auf den Verkleidungsträger.

Diese Ausgestaltung bringt den Vorteil mit sich, dass eine besonders einfache Minimierung des Spalts ermöglicht wird, bei welcher zur Ausübung der Kraft keine weiteren Bauteile notwendig sind.

Es können mehrere Kraftfahrzeug-Karosseriebauteile aneinander fixiert sein und insbesondere zumindest abschnittsweise im Wesentlichen parallel verlaufen. Wenigstens ein Abschnitt wenigstens eines Kraftfahrzeug-Karosseriebauteils bildet die Gegendruckeinrichtung aus. Dieses kann insbesondere dasjenige Kraftfahrzeug-Karosseriebauteil sein, welches bei bestimmungsgemäßer Anordnung des Bauteilsystems in einem Kraftfahrzeug einem Innenraum des Kraftfahrzeugs zugewandt ist.

In dieser Ausgestaltung wird wenigstens eines der den Dachaufbau ausbildenden Kraftfahrzeug-Karosseriebauteile, die auf bekannte Weise zur Steigerung der Festigkeit aneinander fixiert sind und insbesondere abschnittsweise parallel verlaufen, als Gegendruckeinrichtung genutzt. Typischerweise verläuft das betreffende Kraftfahrzeug-Karosseriebauteil auch in seinem als Gegendruckeinrichtung fungierenden Abschnitt im Wesentlichen parallel zu den weiteren Kraftfahrzeug-Karosseriebauteilen. Auch die Wirkrichtung der ersten Kraft kann parallel zu diesen ausgerichtet sein. Die Andruckfläche kann im Wesentlichen rechtwinklig zum parallel verlaufenden Abschnitt des Kraftfahrzeug-Karosseriebauteils ausgerichtet sein.

Mit anderen Worten kontaktiert wenigstens eines der Fahrzeug-Karosseriebauteile den Bereich des U-förmigen Abschnitts des Verkleidungsteils derart, dass es eine kraft- und/oder formschlüssige Verbindung mit dem Verkleidungsteil realisiert.

Diese Ausgestaltung bringt den Vorteil mit sich, dass auf besonders einfache Weise eine sehr stabile Gegendruckeinrichtung zur Verfügung gestellt werden kann.

In einer weiteren Ausgestaltung des Bauteilsystems weist das Verkleidungsteil in einem Wirkbereich der ersten Kraft eine geringere Dicke auf als in wenigstens einem dem Wirkbereich benachbarten Bereich des Verkleidungsteils. Insbesondere ist die geringere Dicke infolge einer durch die Ausübung der ersten Kraft hervorgerufenen Verformung realisiert.

Beispielsweise kann, wie beschrieben, das Verkleidungsteil als flexibles Schaumstoffteil realisiert sein. Dieses kann im Wirkbereich der ersten Kraft, also zwischen Verkleidungsträger und Gegendruckeinrichtung, zusammengedrückt werden.

Typischerweise kann das Verkleidungsteil eine Dicke aufweisen, die um wenigstens 50% bezüglich der Dicke im dem Wirkbereich benachbarten Bereich reduziert ist, beispielsweise infolge der Wirkung der ersten und zweiten Kräfte.

Der Wirkbereich der ersten Kraft sowie der dem Wirkbereich benachbarte Bereich befindet sich insbesondere im ersten Bereich des Verkleidungsteils.

In dieser Ausgestaltung wird der Vorteil erreicht, dass neben der Spaltminimierung auch die feste Anordnung des Verkleidungsteils am Verkleidungsträger gewährleistet ist. Es wird ein Formschluss zwischen Gegendruckeinrichtung und Verkleidungsteil realisiert.

In einer weiteren Ausgestaltung des Bauteilsystems sind die Gegendruckeinrichtung und der Verkleidungsträger in einem Wirkbereich der ersten Kraft in einem Abstand A von weniger als 1 mm, insbesondere weniger als 0,5 mm, zueinander angeordnet.

Infolge der engen Anordnung wird das dazwischen liegende Verkleidungsteil, insbesondere dessen erster Bereich, zwischen Verkleidungsträger und Gegendruckeinrichtung zusammengedrückt und dadurch fest fixiert. Dadurch wird weiterhin gewährleistet, dass kein sichtbarer Spalt auftritt. Ein weiterer Vorteil ist, dass relative Verschiebungen des Verkleidungsteils entlang der Wirkrichtung der ersten Kraft auf diese Weise minimiert werden.

In einer Ausgestaltung weist die Gegendruckeinrichtung eine Andruckfläche zur Ausübung der ersten Kraft auf. Die Andruckfläche kann eine Länge L zwischen 5 mm und 30 mm, insbesondere zwischen 10 mm und 20 mm, aufweisen. Sie kann eine Breite zwischen 0,8 mm und 2,2 mm, insbesondere zwischen 1,2 mm und 1,8 mm, aufweisen. Sie kann eine vorstehende Höhe zwischen 1 mm und 10 mm, insbesondere zwischen 2 mm und 7 mm, aufweisen.

Insbesondere ist die Gegendruckeinrichtung als vorstehender Bereich eines Blechbauteils mit einer Dicke realisiert, die der Breite der Andruckfläche entsprechen kann. In einer Ausführungsform beträgt die vorstehende Höhe zwischen 2,5 und 5 mm.

Diese Ausführungsform bringt den Vorteil mit sich, dass mit sehr geringfügigen Änderungen der Geometrie eines Bauteils unter minimalem zusätzlichen Materialeinsatz die erfindungsgemäße Lösung zur Verfügung gestellt werden kann.

In einer weiteren Ausgestaltung weist das Bauteilsystem weiterhin eine Halteeinrichtung zum Halten des Verkleidungsteils und/oder des Verkleidungsträgers auf. Die Halteeinrichtung ist dabei zur Ausübung einer, insbesondere der ersten Kraft entgegengerichteten, dritten Kraft auf das Verkleidungsteil bzw. den Verkleidungsträger eingerichtet und angeordnet.

Mit anderen Worten wird der Verkleidungsträger mitsamt dem daran angeordneten Verkleidungsteil durch eine Halteeinrichtung in seiner Position gehalten. Die Gegendruckeinrichtung dient dabei als eine Art Widerlager, gegen welches Verkleidungsträger und Verkleidungsteil, insbesondere unter lokaler Verformung des letzteren, gedrückt werden. Die dabei auf das Verkleidungsteil wirkende erste Kraft kann dabei eine infolge der durch die Halteeinrichtung ausgeübte dritte Kraft realisierte Kraft sein. Der Vorteil dieser Ausgestaltung ist, dass die Einheit aus Verkleidungsträger und Verkleidungsteil auf besonders einfache Weise fest im Fahrzeug fixiert ist.

Ein zweiter Aspekt der Erfindung ist ein Kraftfahrzeug, insbesondere ein Personenkraftwagen. Dieses weist wenigstens ein erfindungsgemäßes Bauteilsystem zur Fixierung eines Verkleidungsteils auf.

Das Verkleidungsteil kann beispielsweise der Formhimmel des Kraftfahrzeugs sein, welcher in Bezug zur wenigstens einem Karosseriebauteil des Kraftfahrzeugdaches positioniert wird, etwa zwischen der C-Säule und der D-Säule.

In einer Ausgestaltung des Kraftfahrzeugs weist dieses eine Säulenverkleidung zur Verkleidung einer Fahrzeugsäule, insbesondere einer C-Säule, auf. Die Säulenverkleidung bildet dabei eine Halteeinrichtung zum Halten des Verkleidungsteils und/oder des Verkleidungsträgers aus. Die Halteeinrichtung ist zur Ausübung einer insbesondere der ersten Kraft entgegengerichteten dritten Kraft auf das Verkleidungsteil bzw. den Verkleidungsträger eingerichtet und angeordnet.

Mit anderen Worten ist ein Teil des Verkleidungsträgers zwischen der Kraftfahrzeugkarosserie und der Säulenverkleidung angeordnet und wird durch letztere in seiner Position in Bezug zur Kraftfahrzeugkarosserie fixiert. Dabei übt die Säulenverkleidung eine dritte Kraft auf den Verkleidungsträger bzw. das Verkleidungsteil aus, in deren Folge der erste Bereich des Verteilungsteils unter Wirkung der ersten Kraft die Gegendruckeinrichtung kontaktiert.

Die Erfindung wird im Folgenden anhand der in den beiliegenden Zeichnungen dargestellten Ausführungsbeispiele erläutert.

Es zeigen
Fig. 1: einen Schnitt durch den seitlichen Anbindungsbereich eines Kraftfahrzeug-Formhimmels an den Rohbau im Bereich der C-Säule gemäß dem Stand der Technik,
Fig. 2: eine perspektivische Ansicht eines Anbindungsbereichs analog zu dem in Figur 1 gezeigten von außen,
Fig. 3: einen Schnitt durch den seitlichen Anbindungsbereich eines Kraftfahrzeug-Formhimmels an den Rohbau im Bereich der C-Säule mit einem erfindungsgemäßen Bauteilsystem,
Fig. 4: eine perspektivische Ansicht eines Anbindungsbereichs analog zu dem in Figur 3 gezeigten von außen,
Fig. 5: eine perspektivische Detaildarstellung einer Gegendruckeinrichtung eines erfindungsgemäßen Bauteilsystems.

Auf die Figuren 1 und 2 wurde bereits zur Erläuterung des Standes der Technik eingegangen.

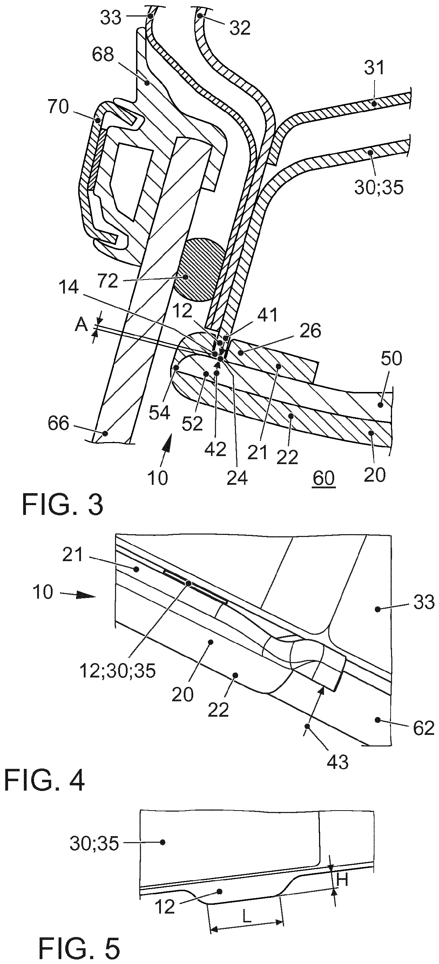

Figur 3 zeigt einen Schnitt durch den seitlichen Anbindungsbereich eines Verkleidungsteils 20, nämlich eines Formhimmels, an ein Kraftfahrzeug-Karosseriebauteil 35, nämlich ein Seitenteil innen 30. Der Schnitt verläuft analog zu Fig. 1 senkrecht zur Längserstreckungsrichtung der C-Säule mit Blickrichtung entgegen der Fahrtrichtung des Kraftfahrzeugs und zeigt die rechte Seite bzw. Beifahrerseite des Kraftfahrzeugs.

Der Kraftfahrzeug-Rohbau umfasst an der gezeigten Position neben dem Seitenteil innen 30 ein Seitenteil innen hinten 31, ein Verbindungsteil hinten 32 sowie ein Seitenteil außen 33. Diese bilden gemeinsam einen Teil der Dachkonstruktion aus. Im äußeren, links dargestellten Bereich, schließt an das Seitenteil außen 33 ein partiell mittels einer Außenblende 70 verblendetes Dichtungsprofil 68 an. Dieses hält die Seitenscheibe 66, welche mittels einer Kleberaupe 72 am Seitenteil außen 33 befestigt ist.

Das Seitenteil außen 33, das Verbindungsteil hinten 32 sowie das Seitenteil innen 30 verlaufen in ihren unteren Bereichen abschnittsweise parallel zueinander und sind in diesen Bereichen aneinander fixiert. Das Seitenteil außen 33 und das Verbindungsteil 32 enden in einer gemeinsamen Stirnseite, während sich das daneben angeordnete Seitenteil innen 30 weiter nach unten in Richtung auf das Verkleidungsteil 20 erstreckt. Das Seitenteil innen 30 ist dasjenige Kraftfahrzeug-Karosseriebauteil 35, welches bei der gezeigten bestimmungsgemäßen Anordnung des Bauteilsystems 10 in einem Kraftfahrzeug dem Innenraum 60 des Kraftfahrzeugs zugewandt ist.

Der untere Abschnitt des Seitenteils innen 30, einem Kraftfahrzeug-Karosseriebauteil 35, ist als Gegendruckeinrichtung 12 mit einer Andruckfläche 14 zur Ausübung einer ersten Kraft 41 auf einen darunter liegenden ersten Bereich 21 des Verkleidungsteils 20 ausgebildet. Gemeinsam mit dem Verkleidungsteil 20 und dem Verkleidungsträger 50 bildet diese das erfindungsgemäße Bauteilsystem 10, welches das Verkleidungsteil 20 in einer definierten Position in Bezug zu dem Kraftfahrzeug-Karosseriebauteil 35 fixiert. Zusätzlich zum Seitenteil innen 30 könnte auch das Verbindungsteil hinten 32 und/oder das Seitenteil außen 33 entsprechend verlängert und als Gegendruckeinrichtung 12 genutzt werden.

Analog zu Fig. 1 wird das Verkleidungsteil 20, nämlich der den Kraftfahrzeug-Innenraum 60 nach oben hin begrenzenden Formhimmel des Kraftfahrzeugs, auch hiervon einem Verkleidungsträger 50 gehalten. Das Verkleidungsteil ist U-förmig um die links dargestellte Begrenzung 54 des Verkleidungsträgers 50 angeordnet, nämlich um diese herumgebogen. Der erste Bereich 21 des Verkleidungsteils 20 liegt oberhalb des entsprechenden Abschnitts 52 des Verkleidungsträgers 50 und ein zweiter Bereich 22 des Verkleidungsteils 20 ist an der dem ersten Bereich 21 gegenüberliegenden Seite des Verkleidungsträgers 50 angeordnet, liegt also unterhalb des Abschnitts 52.

Ein Abschnitt 52 des Verkleidungsträgers 50 ist zwecks Ausübung einer der ersten Kraft 41 entgegengerichteten zweiten Kraft 42 auf den ersten Bereich 21 des Verkleidungsteils 20 an der der Gegendruckeinrichtung 12 gegenüberliegenden Seite des ersten Bereichs 21 des Verkleidungsteils 20 angeordnet. Somit wird das Verkleidungsteil 20 von zwei Seiten zusammengedrückt bzw. eingeklemmt, nämlich vom Verkleidungsträger 50 und von der Gegendruckeinrichtung 12.

Es ist ersichtlich, dass das Verkleidungsteil 20 im Wirkbereich 24 der ersten Kraft 41, in welchem ebenso die zweite Kraft 42 auf das Verkleidungsteil 20 wirkt, eine geringere Dicke aufweist als im dem Wirkbereich 24 benachbarten Bereich 26. Dies ist die Folge einer durch die Ausübung der ersten Kraft 41 und der zweiten Kraft 42 hervorgerufenen Verformung des Verkleidungsteils 20, eines Schaumstoffteils. Somit ist ersichtlich, dass das Verkleidungsteil 20 durch die erste Kraft einerseits an den Verkleidungsträger 50 angedrückt und somit an diesem befestigt ist, und dass andererseits eine Verschiebung von Verkleidungsträger 50 und Verkleidungsteil 20 nach oben durch die Gegendruckeinrichtung 12 effektiv verhindert wird.

Die Gegendruckeinrichtung 12 und der Verkleidungsträger 50 sind im Wirkbereich 24 der ersten Kraft 41 sowie der zweiten Kraft in einem Abstand A von weniger als 0.5 mm zueinander angeordnet. Demnach ist das Verkleidungsteil in diesem Bereich auf die genannte Dicke zusammengedrückt.

In Fig. 4 ist analog zu Fig. 2 das aus der erfindungsgemäßen Konstruktion resultierende Bild am Übergang des Verkleidungsteils 20 zur Säulenverkleidung 62, hier der Verkleidung der C-Säule, gezeigt. Mit Blickrichtung von außen auf die rechte Seite bzw. Fahrerseite eines das erfindungsgemäße Bauteilsystem 10 aufweisenden Kraftfahrzeugs durch die nicht dargestellte Seitenscheibe zeigt sich der umgebogene Bereich des Verkleidungsteils 20 von außen. Oben befindet sich der erste Bereich 21 des Verkleidungsteils 20 und darunter befindet sich dessen zweiter Bereich 22.

Zwischen dem oben liegenden ersten Bereich 21 des Verkleidungsteils 20 und dem Kraftfahrzeug-Rohbau, nämlich dem Seitenteil außen 33, ist ein Spalt zu erkennen. In diesem ist ein Teil der Gegendruckeinrichtung 12 sichtbar, die wie beschrieben mittels eines Abschnitts eines Kraftfahrzeug-Karosseriebauteils 35, nämlich des Seitenteils innen 30, realisiert ist.

Auf der rechten Seite ist ersichtlich, dass das um den (nicht gezeigten) Verkleidungsträger umgebogene Verkleidungsteil 20 in die Säulenverkleidung 62 eingesteckt ist bzw. von dieser gehalten wird. Dabei fungiert die Säulenverkleidung 62 als Halteeinrichtung zum Halten des Verkleidungsteils 20 bzw. des Verkleidungsträgers 50. Sie ist zur Ausübung einer der ersten Kraft 41 entgegengerichteten dritten Kraft 43 auf das Verkleidungsteil 20 bzw. den Verkleidungsträger 50 eingerichtet und angeordnet und hält diese somit in der gewünschten Position.

Die Gegendruckeinrichtung 12 dient als effektiver Schutz des Verkleidungsträgers 50 und des Verkleidungsteils 20 vor einem Verschieben nach oben. Somit kann die in Bezug zur Fig. 2 erwähnte Rastnase hier bestimmungsgemäß eingehakt werden, sodass die in Fig. 2 gezeigte Lücke hier nicht auftritt.

Fig. 5 zeigt die als ein Abschnitt des Kraftfahrzeug-Karosseriebauteils 35, nämlich des Seitenteils innen 30, ausgebildete Gegendruckeinrichtung 12. Diese weist eine zur Ausübung der ersten Kraft 41 eingerichtete, im Wesentlichen ebene Andruckfläche 14 auf, welche eine Länge L von 15 mm und eine Höhe H von 3,6 mm hat. Somit handelt es sich um eine bereichsweise Verlängerung des aus Blech mit einer Dicke von 1,5 mm hergestellten Seitenteils innen 30.

**Bezugszeichenliste**

| | |
|---|---|
| Bauteilsystem | 10 |
| Gegendruckeinrichtung | 12 |
| Andruckfläche | 14 |
| Verkleidungsteil | 20 |
| Erster Bereich | 21 |
| Zweiter Bereich | 22 |
| Wirkbereich der ersten Kraft | 24 |
| Benachbarter Bereich | 26 |
| Seitenteil innen | 30 |
| Seitenteil innen hinten | 31 |
| Verbindungsteil hinten | 32 |
| Seitenteil außen | 33 |
| Kraftfahrzeug-Karosseriebauteil | 35 |
| Erste Kraft | 41 |
| Zweite Kraft | 42 |
| Dritte Kraft | 43 |
| Verkleidungsträger | 50 |
| Abschnitt des Verkleidungsträgers | 52 |
| Begrenzung des Verkleidungsträgers | 54 |
| Innenraum | 60 |
| Säulenverkleidung | 62 |
| Distanzstück | 64 |
| Seitenscheibe | 66 |
| Dichtungsprofil | 68 |
| Außenblende | 70 |
| Kleberaupe | 72 |
| Abstand | A |
| Länge der Andruckfläche | L |
| Höhe der Gegendruckeinrichtung | H |

## Patentansprüche

1. Bauteilsystem (10) zur Fixierung eines Verkleidungsteils (20) in einer definierten Position, umfassend ein in Bezug zu einem Kraftfahrzeug-Karosseriebauteil (35) zu fixierendes Verkleidungsteil (20), insbesondere einen Formhimmel, einen Verkleidungsträger (50) zum Tragen des Verkleidungsteils (20) sowie eine Gegendruckeinrichtung (12) zur Ausübung einer ersten Kraft (41) auf einen ersten Bereich (21) des Verkleidungsteils (20),
wobei zumindest ein Abschnitt (52) des Verkleidungsträgers (50) zwecks Ausübung einer der ersten Kraft (41) entgegengerichteten zweiten Kraft (42) auf den ersten Bereich (21) des Verkleidungsteils (20) an der der Gegendruckeinrichtung (12) gegenüberliegenden Seite des ersten Bereichs (21) des Verkleidungsteils (20) angeordnet ist, und wobei ein zweiter Bereich (22) des Verkleidungsteils (20) an der dem ersten Bereich (21) des Verkleidungsteils (20) gegenüberliegenden Seite des Verkleidungsträgers (50) angeordnet ist und damit eine sichtbare Seite des Verkleidungsteils (20) ausbildet,
**dadurch gekennzeichnet, dass** das Bauteilsystem (10) das Kraftfahrzeug-Karosseriebauteil (35) umfasst, wobei wenigstens ein Abschnitt des Kraftfahrzeug-Karosseriebauteils (35) die Gegendruckeinrichtung (12) ausbildet.

2. Bauteilsystem (10) zur Fixierung eines Verkleidungsteils (20) nach Anspruch 1, **dadurch gekennzeichnet, dass** das Verkleidungsteil (20) U-förmig um eine Begrenzung (54) des Verkleidungsträgers (50) angeordnet ist.

3. Bauteilsystem (10) zur Fixierung eines Verkleidungsteils (20) nach einem der vorhergehenden Ansprüche, **dadurch gekennzeichnet, dass** mehrere Kraftfahrzeug-Karosseriebauteile (30, 31, 32, 33, 35) aneinander fixiert sind und insbesondere zumindest abschnittsweise im Wesentlichen parallel verlaufen, wobei wenigstens ein Abschnitt wenigstens eines Kraftfahrzeug-Karosseriebauteils (30, 31, 32, 33, 35), insbesondere zumindest desjenigen Kraftfahrzeug-Karosseriebauteils (30; 35), welches bei bestimmungsgemäßer Anordnung des Bauteilsystems (10) in einem Kraftfahrzeug einem Innenraum (60) des Kraftfahrzeugs zugewandt ist, die Gegendruckeinrichtung (12) ausbildet.

4. Bauteilsystem (10) zur Fixierung eines Verkleidungsteils (20) nach einem der vorhergehenden Ansprüche, **dadurch gekennzeichnet, dass** das Verkleidungsteil (20) in einem Wirkbereich (24) der ersten Kraft (41) eine geringere Dicke aufweist als in wenigstens einem dem Wirkbereich (24) benachbarten Bereich (26) des Verkleidungsteils (20), wobei die geringere Dicke insbesondere infolge einer durch die Ausübung der ersten Kraft (41) hervorgerufenen Verformung realisiert ist.

5. Bauteilsystem (10) zur Fixierung eines Verkleidungsteils (20) nach einem der vorhergehenden Ansprüche, **dadurch gekennzeichnet, dass** die Gegendruckeinrichtung (12) und der Verkleidungsträger (50) in einem Wirkbereich (24) der ersten Kraft (41) in einem Abstand A von weniger als 1 mm, insbesondere weniger als 0.5 mm, zueinander angeordnet sind.

6. Bauteilsystem (10) zur Fixierung eines Verkleidungsteils (20) nach einem der vorhergehenden Ansprüche, **dadurch gekennzeichnet, dass** die Gegendruckeinrichtung (12) eine Andruckfläche (14) zur Ausübung der ersten Kraft (41) aufweist, wobei die Andruckfläche (14) eine Länge L zwischen 5 mm und 30 mm, insbesondere zwischen 10 mm und 20 mm, eine Breite zwischen 0,8 mm und 2,2 mm, insbesondere zwischen 1,2 mm und 1,8 mm, und/oder eine Höhe zwischen 2 mm und 7 mm, insbesondere zwischen 2,5 mm und 5 mm, aufweist

7. Bauteilsystem (10) zur Fixierung eines Verkleidungsteils (20) nach einem der vorhergehenden Ansprüche, **dadurch gekennzeichnet, dass** das Bauteilsystem (10) weiterhin eine Halteeinrichtung zum Halten des Verkleidungsteils (20) und/oder des Verkleidungsträgers (50) aufweist, wobei die Halteeinrichtung zur Ausübung einer insbesondere der ersten Kraft (41) entgegengerichteten dritten Kraft (43) auf das Verkleidungsteil (20) bzw. den Verkleidungsträger (50) eingerichtet und angeordnet ist.

8. Kraftfahrzeug, insbesondere Personenkraftwagen, **dadurch gekennzeichnet, dass** dieses wenigstens ein Bauteilsystem (10) zur Fixierung eines Verkleidungsteils (20) gemäß einem der Ansprüche 1-7 aufweist.

9. Kraftfahrzeug nach Anspruch 8, **dadurch gekennzeichnet, dass** das Kraftfahrzeug eine Säulenverkleidung (62) zur Verkleidung einer Fahrzeugsäule, insbesondere einer C-Säule, aufweist, wobei die Säulenverkleidung eine Halteeinrichtung zum Halten des Verkleidungsteils (20) und/oder des Verkleidungsträgers (50) ausbildet, welche zur Ausübung einer insbesondere der ersten Kraft (41) entgegengerichteten dritten Kraft (43) auf das Verkleidungsteil (20) bzw. den Verkleidungsträger (50) eingerichtet und angeordnet ist.

## Claims

1. Component system (10) for securing a trim part (20) in a defined position, comprising a trim part (20) to be secured in relation to a motor vehicle body component (35), in particular a moulded headliner, a trim support (50) for supporting the trim part (20), and a counter-pressure device (12) for exerting a first force (41) on a first region (21) of the trim part (20),
wherein at least a portion (52) of the trim support (50), for the purpose of exerting a second force (42), counter to the first force (41), on the first region (21) of the trim part (20), is arranged on the opposite side of the first region (21) of the trim part (20) from the counter-pressure device (12), and wherein a second region (22) of the trim part (20) is arranged on the opposite side of the trim support (50) from the first region (21) of the trim part (20) and thus forms a visible side of the trim part (20),
**characterized in that** the component system (10) comprises the motor vehicle body component (35), wherein at least a portion of the motor vehicle body component (35) forms the counter-pressure device (12) .

2. Component system (10) for securing a trim part (20) according to Claim 1, **characterized in that** the trim part (20) is arranged in a U-shaped manner around a periphery (54) of the trim support (50).

3. Component system (10) for securing a trim part (20) according to either of the preceding claims, **characterized in that** a plurality of motor vehicle body components (30, 31, 32, 33, 35) are secured together and in particular extend at least partially in a substantially parallel manner, wherein at least a portion of at least one motor vehicle body component (30, 31, 32, 33, 35), in particular at least of that motor vehicle body component (30; 35) that faces a passenger compartment (60) of the motor vehicle when the component system (10)is arranged properly in a motor vehicle, forms the counter-pressure device (12).

4. Component system (10) for securing a trim part (20) according to one of the preceding claims, **characterized in that** the trim part (20) has a smaller thickness in an active region (24) of the first force (41) than in at least one region (26) of the trim part (20) that is next to the active region (24), wherein the smaller thickness is realized in particular as a result of a deformation caused by the exertion of the first force (41).

5. Component system (10) for securing a trim part (20) according to one of the preceding claims, **characterized in that** the counter-pressure device (12) and the trim support (50) are spaced apart from one another at a spacing A of less than 1 mm, in particular less than 0.5 mm, in an active region (24) of the first force (41).

6. Component system (10) for securing a trim part (20) according to one of the preceding claims, **characterized in that** the counter-pressure device (12) has a contact-pressure surface (14) for exerting the first force (41), wherein the contact-pressure surface (14) has a length L of between 5 mm and 30 mm, in particular between 10 mm and 20 mm, a width of between 0.8 mm and 2.2 mm, in particular between 1.2 mm and 1.8 mm, and/or a height of between 2 mm and 7 mm, in particular between 2.5 mm and 5 mm.

7. Component system (10) for securing a trim part (20) according to one of the preceding claims, **characterized in that** the component system (10) also has a retaining device for retaining the trim part (20) and/or the trim support (50), wherein the retaining device is set up and arranged so as to exert a third force (43), in particular counter to the first force (41), on the trim part (20) or the trim support (50).

8. Motor vehicle, in particular passenger car, **characterized in that** it has at least one component system (10) for securing a trim part (20) according to one of Claims 1-7.

9. Motor vehicle according to Claim 8, **characterized in that** the motor vehicle has pillar trim (62) for covering a vehicle pillar, in particular a C pillar, wherein the pillar trim forms a retaining device for retaining the trim part (20) and/or the trim support (50) , said retaining device being set up and arranged so as to exert a third force (43), in particular counter to the first force (41), on the trim part (20) or the trim support (50).

## Revendications

1. Système de composants (10) pour la fixation d'une partie d'habillage (20) dans une position définie, comprenant une partie d'habillage (20) à fixer par rapport à un composant de carrosserie de véhicule automobile (35), notamment une garniture de plafond moulé, un support d'habillage (50) pour supporter la partie d'habillage (20) ainsi qu'un dispositif de contre-pression (12) pour exercer une première force (41) sur une première zone (21) de la partie d'habillage (20) ;
au moins une section (52) du support d'habillage (50) étant disposée au niveau du côté de la première zone (21) de la partie d'habillage (20) opposé au dispositif de contre-pression (12) en vue de l'application d'une deuxième force (42) opposée à la première force (41) sur la première zone (21) de la partie d'habillage (20), et une deuxième zone (22) de la partie d'habillage (20) étant disposée au niveau du côté du support d'habillage (50) opposé à la première zone (21) de la partie d'habillage (20) et formant ainsi un côté visible de la partie d'habillage (20) ;
**caractérisé en ce que** le système de composants (10) comprend le composant de carrosserie de véhicule automobile (35), au moins une section du composant de carrosserie de véhicule automobile (35) formant le dispositif de contre-pression (12).

2. Système de composants (10) pour la fixation d'une partie d'habillage (20) selon la revendication 1, **caractérisé en ce que** la partie d'habillage (20) est disposée en forme de U autour d'une délimitation (54) du support d'habillage (50).

3. Système de composants (10) pour la fixation d'une partie d'habillage (20) selon l'une quelconque des revendications précédentes, **caractérisé en ce que** plusieurs composants de carrosserie de véhicule automobile (30, 31, 32, 33, 35) sont fixés les uns aux autres et s'étendent notamment au moins en partie pour l'essentiel parallèlement, au moins une section d'au moins un composant de carrosserie de véhicule automobile (30, 31, 32, 33, 35), notamment au moins du composant de carrosserie de véhicule automobile (30 ; 35) orienté vers un habitacle (60) du véhicule automobile lors d'agencement conforme à son usage du système de composants (10) dans un véhicule automobile, formant le dispositif de contre-pression (12).

4. Système de composants (10) pour la fixation d'une partie d'habillage (20) selon l'une quelconque des revendications précédentes, **caractérisé en ce que** la partie d'habillage (20) comporte dans une zone active (24) de la première force (41) une épaisseur plus réduite que dans au moins une zone (26) de la partie d'habillage (20) adjacente à la zone active (24), l'épaisseur plus réduite étant notamment réalisée en raison de la déformation produite par l'application de la première force (41).

5. Système de composants (10) pour la fixation d'une partie d'habillage (20) selon l'une quelconque des revendications précédentes, **caractérisé en ce que** le dispositif de contre-pression (12) et le support d'habillage (50) sont disposés dans une zone active (24) de la première force (41) à une certaine distance A inférieure à 1 mm, notamment inférieure à 0,5 mm, l'un par rapport à l'autre.

6. Système de composants (10) pour la fixation d'une partie d'habillage (20) selon l'une quelconque des revendications précédentes, **caractérisé en ce que** le dispositif de contre-pression (12) comporte une surface d'appui (14) pour l'application de la première force (41), la surface d'appui (14) présentant une longueur L entre 5 mm et 30 mm, notamment entre 10 mm et 20 mm, une largeur entre 0,8 mm et 2,2 mm, notamment entre 1,2 mm et 1,8 mm, et/ou une hauteur entre 2 mm et 7 mm, notamment entre 2,5 mm et 5 mm.

7. Système de composants (10) pour la fixation d'une partie d'habillage (20) selon l'une quelconque des revendications précédentes, **caractérisé en ce que** le système de composants (10) comporte en outre un dispositif de maintien pour le maintien de la partie d'habillage (20) et/ou du support d'habillage (50), le dispositif de maintien étant conçu et disposé pour appliquer une troisième force (43) notamment opposée à la première force (41) sur la partie d'habillage (20) ou le support d'habillage (50).

8. Véhicule automobile, notamment véhicule de tourisme, **caractérisé en ce que** celui-ci comporte au moins un système de composants (10) pour la fixation d'une partie d'habillage (20) selon l'une quelconque des revendications 1 à 7.

9. Véhicule automobile selon la revendication 8, **caractérisé en ce que** le véhicule automobile comporte un habillage de montant (62) pour l'habillage d'un montant de véhicule, notamment d'un montant C, l'habillage de montant formant un dispositif de maintien pour le maintien de la partie d'habillage (20) et/ou du support d'habillage (50), orienté et conçu pour appliquer une troisième force (43) notamment opposée à la première force (41) sur la partie d'habillage (20) ou le support d'habillage (50).
